# EUROPEAN PATENT SPECIFICATION

(11) **EP 4 455 460 B1**
(45) Date of publication and mention of the grant of the patent: **25.02.2026**
(21) Application number: 24170096.2
(22) Date of filing: 12.04.2024
(51) Int. Cl.: F01K 13/02, F01K 23/10

(54) **COMBINED CYCLE POWER GENERATION SYSTEMS**
STROMERZEUGUNGSSYSTEME MIT KOMBINIERTEM ZYKLUS
SYSTÈMES DE GÉNÉRATION D'ÉNERGIE À CYCLE COMBINÉ

(30) Priority: 28.04.2023 WO PCT/US2023/020447
(43) Date of publication of application: 30.10.2024
(73) Proprietor: GE Vernova Technology GmbH, 5400 Baden (CH)
(72) Inventor: SMITH, Raub Warfield, Schenectady 12345 (US)
(74) Representative: Novagraaf Group

(56) References cited:
- EP-A2- 2 599 971
- WO-A1-2023/195985
- US-A1- 2014 096 535

## Description

### BACKGROUND

The subject matter disclosed herein relates generally to combined cycle power generation systems, and more particularly, relates to combined cycle power generation systems including coordinated system configurations and control strategies that facilitate maximizing load turndown controls. The invention as herein claimed relates to the subject matter set forth in the claims.

A combined cycle power generation system utilizes a gas turbine and a steam turbine in combination to produce power. The power generation system is arranged such that the gas turbine is thermally connected to the steam turbine through a heat recovery steam generator ("HRSG") that enables feedwater for the steam generation process to be heated by otherwise wasted exhaust gases. In some configurations, the fluid may be steam generated at multiple pressure levels and channeled to any of the high-pressure, intermediate-pressure, and/or low-pressure sections of a steam turbine.

Some combined cycle systems include a steam turbine extractor that provides process steam in support of industrial, carbon capture and sequestration (CCS), or district heating systems. These steam extractions are commonly pressure-controlled to facilitate maintaining the process steam supply pressure across a steam flow or plant load operating range. If the plant load or process steam demand moves outside of the permissible operating range for steam extraction from the turbine, there are commonly fallback provisions to cause steam to be extracted from a high-pressure steam source with subsequent pressure and temperature reduction to satisfy process requirements.

This fallback mode is much less efficient since the process steam is no longer initially expanding to generate power in a steam turbine. Operation is most efficient when process steam is available from the steam extraction after it has already performed work while expanding to the (lower) pressure required for the process. However, the minimum steam turbine load where process steam extraction is technically feasible may be limited, because as load is reduced, the extraction steam temperature gradually increases until the steam turbine components at the extraction point become too hot and exceed thermal limits. This occurs due to decreasing pressure ratio for steam expansion across the turbine between a steam inlet (which reduces in pressure with flow reduction) and steam extraction (which is controlled to fixed pressure by valves, as required for supply to the process steam user).

As such, the ideal location for steam extraction is often downstream of the intermediate pressure (IP) turbine inlet. This leads to a requirement for intermediate-pressure (IP) turbine inlet (reheat) steam temperature turndown control to manage the steam temperature leaving the steam turbine extraction. HRSG's commonly include a water spray attemperator (desuperheater) to reduce the temperature of the high pressure and reheat exit steam by combining the superheated steam with water, such that the steam is cooled as the water evaporates. However, reheat steam temperature control, using conventional steam temperature control means, may be limited. Extending operation with steam extraction active is desired because it is more efficient than shifting the process steam supply to a higher pressure and temperature source since steam from such a source no longer has a chance to do work by expanding through the steam turbine.

Conventional reheat steam temperature control systems with water spray attemperation between reheat sections may be limited by the volume of water that can be safely injected and evaporated within the HRSG. This is also inherently inefficient since high level energy is used to evaporate the spray water within the HRSG. A more efficient approach is to utilize cool steam instead of water to reduce the temperature of the steam entering the reheater. This approach however may also be limited in temperature control authority by how much the exit steam temperature can be reduced. When reheat steam temperature control authority is increased to allow lower steam temperature, the load range available to provide extraction steam to process also increases.

Therefore, there is a need in the art to improve reheat steam temperature turndown control in heat recovery steam generator systems.

EP 2 599 971 A2 suggests a control system including at least one sensor configured to detect at least one operating condition within at least one first boiler and at least one second boiler. A controller is coupled to the sensor and is configured to determine a fluid pressure set point and/or a fluid temperature set point for the first and second boilers based on the operating condition detected for each. The controller is also configured to maintain a fluid pressure and/or a fluid temperature within the first and second boilers to be approximately equal to the determined fluid pressure set point and the fluid temperature set point for each of the first boiler and second boiler, respectively, prior to fluid flow being channeled and/or during the channeling of fluid flow from the first boiler and/or the second boiler to a steam process and/or at least one steam turbine engine. The gas turbine system suggested in US 2014/0096535 A1 includes a gas turbine engine producing a flow of exhaust gases, a heat recovery steam generator with a reheater and an evaporator in communication with the flow of exhaust gases, and a gas flow control system configured for diverting a first portion of the flow of exhaust gases away from the reheater and towards the evaporator.

### BRIEF DESCRIPTION

The herein claimed invention relates to the subject matter set forth in the appended claims. More specifically, it relates to a power generation system including a gas turbine is disclosed. The power generation system includes a steam supply system including a steam supply system including a high-temperature high pressure superheater and a high-temperature intermediate pressure reheater; a steam turbine assembly including at least one of a non-condensing steam turbine, a high-pressure steam turbine section, an intermediate-pressure steam turbine section; and low-pressure steam turbine section; and, a control system coupled to the steam supply system and to the steam turbine assembly, the control system configured to: selectively control a supply of reheat steam to the non-condensing steam turbine and to the intermediate-pressure steam turbine section; and selectively control a supply of high pressure superheated steam to the non-condensing steam turbine and high-pressure steam turbine section.

Further disclosed, while not currently claimed, is a control system for use with a power generation system is disclosed. The power generation system including at least a steam turbine assembly and a steam supply system, wherein the steam turbine assembly includes at least one of a non-condensing steam turbine, a high-pressure steam turbine section, an intermediate-pressure steam turbine section, and a low-pressure steam turbine section, the steam supply system includes at least a high temperature high-pressure superheater and a high-temperature intermediate pressure reheater. The control system includes a first control valve to selectively control a supply of one of high pressure superheated steam and reheat steam to the non-condensing steam turbine; a second control valve to selectively control a supply of reheat steam to the intermediate-pressure steam turbine section; and, a main steam control valve to selectively control a supply of high pressure superheated steam to a high-pressure steam turbine section.

Still further disclosed, while not currently claimed, is a method for effectuating load turndown control of a power generation system including a gas turbine assembly is disclosed. The method includes providing a steam supply system including a high-temperature high pressure superheater and a high-temperature intermediate pressure reheater; providing a steam turbine assembly including at least one of a non-condensing steam turbine, a high-pressure steam turbine section, an intermediate-pressure steam turbine section; and a low-pressure steam turbine section, and, coupling a control system to the steam supply system and to the steam turbine assembly, wherein the control system is configured to: selectively control a supply of reheat steam to the non-condensing steam turbine and to the intermediate-pressure steam turbine section; and selectively control a supply of high pressure superheated steam to at least one of the non-condensing steam turbine and the high-pressure steam turbine section.

### BRIEF DESCRIPTION OF THE DRAWINGS

FIG. 1 is a schematic diagram of an exemplary combined cycle power generation system having an HRSG system with combined main and parallel intermediate pressure (IP) non-condensing steam turbine steam supply, in accordance with an embodiment of the present invention;
FIG. 2 is a block diagram of a control system to facilitate opening and closing of control valves of the combined cycle power generation system of FIG. 1;
FIG. 3 is a schematic diagram of the power generation system of FIG. 1, including an exemplary HRSG system with combined main and parallel IP non-condensing steam turbine steam supply;
FIG. 4 is a schematic diagram of the power generation system of FIG. 1 including an exemplary HRSG system with combined main and parallel HP non-condensing steam turbine steam supply; and,
FIGS. 5A through 5E illustrate a method for effectuating load turndown control of power generation system including a gas turbine assembly.

The reference symbols used in the drawings, and their meanings, are listed in summary form in the list of reference symbols. In principle, identical parts are provided with the same reference symbols in the figures.

### DETAILED DESCRIPTION

In the following specification and the claims, reference will be made to a number of terms, which shall be defined to have the following meanings.

As used herein, the singular forms "a," "an," and "the" include plural references unless the context clearly dictates otherwise. The terms "comprising," "including," and "having" are intended to be inclusive and mean that there may be additional elements other than the listed elements. The terms "optional" or "optionally" means that the subsequently described event or circumstance may or may not occur, and that the description includes instances where the event occurs and instances where it does not.

Additionally, unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

Exemplary embodiments of the present invention are directed to various plant design configurations that can be used to improve part load plant efficiency by extending the operable range using controlled steam extraction. The exemplary plant design configurations include one or more of (1) deep reheat steam temperature control, (2) an intermediate pressure (IP) turbine overload valve and (3) a non-condensing steam turbine (NCST) operating in parallel to the main steam turbine. The embodiments described herein use the configurations separately or in combination to achieve the lowest possible plant turndown before a backup source of steam to process is be activated. The present disclosure describes coordination of the configurations to achieve low plant turndown by operation of control valves in various sequences.

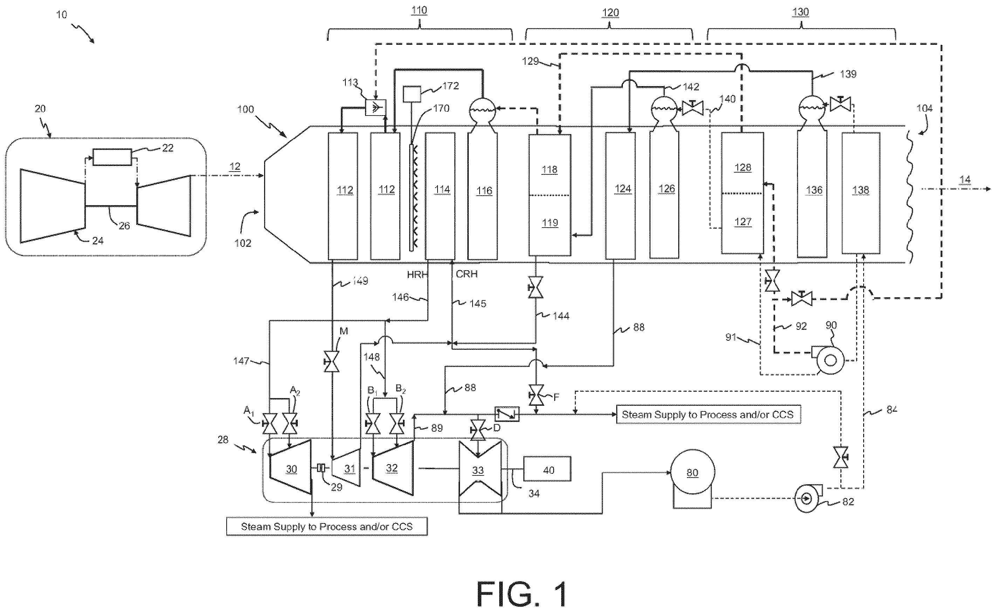

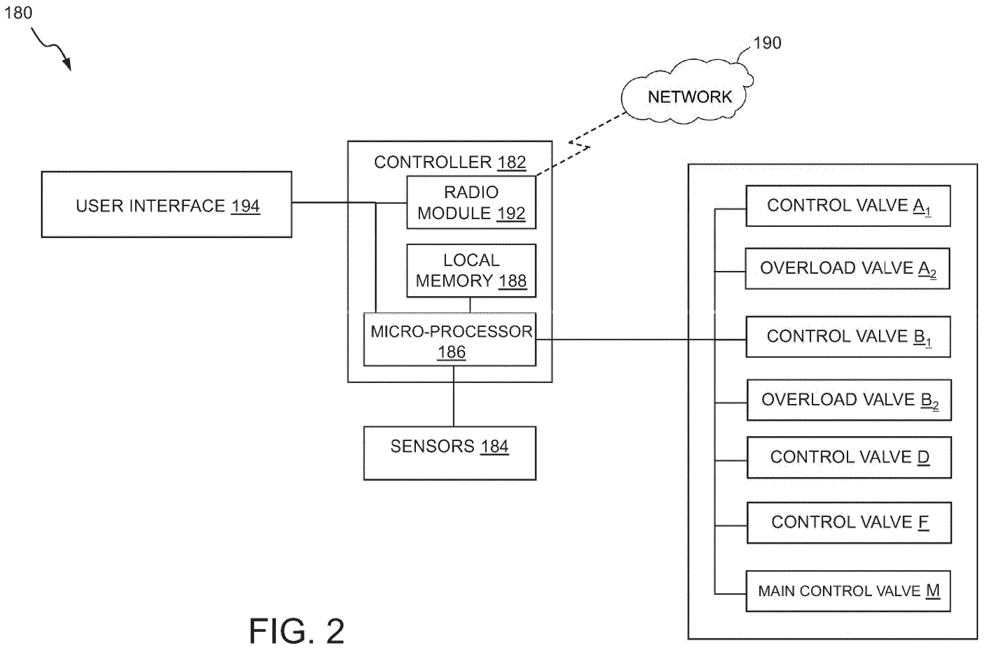

FIG. 1 illustrates an exemplary power generation system 10 including a gas turbine system 20 having a gas combustor 22 and a compressor 24, a main steam turbine 28 and a HRSG 100. The HRSG 100 is an exemplary steam supply system for the main steam turbine 28. It is therefore understood that the illustrated HRSG 100 is merely illustrative of a steam supply system, and other steam supply systems may be included as part of the illustrated power generation system 10. The components of the HRSG 100, in the illustrated embodiment, are a simplified depiction of the HRSG 100 and are not intended to limit what may be included in the HRSG 100. Rather, the illustrated HRSG 100 is merely shown to convey the general operation of HRSG systems. In the exemplary embodiment, the main steam turbine 28 includes a non-condensing steam turbine 30 (referred to as NCST 30) high-pressure turbine section (referred to as HP steam turbine 31), an intermediate-pressure turbine section (referred to as IP steam turbine 32), and one or more low pressure turbine sections (referred to as LP steam turbine 33) with multiple steam admission points at the different pressures. In some embodiments, the NCST 30 also includes a self-synchronizing clutch 29 configured to declutch the NCST 30 when the NCST 30 ceases to produce power in some embodiments as explained in more detail with reference to FIGS. 2-4. In some embodiments, the NCST 30 may alternatively drive its own load or generator instead of being clutched into the main steam turbine generator 28.

The NCST 30 is operable in one or more system operating points. As used herein, the terms "operating point(s)" and "load state(s)" refer generally to operating conditions, and/or states and is not intended to be limiting. Thus, an operating point may refer to an operating state of the NCST 30, such as base load, turndown point, peak fire, and the like. The NCST 30 is operable between a base load state and a minimum load state. The minimum load state is less than the base load state and is defined by the operation point where the NCST 30 ceases to produce steam supply to process and/or CCS. While power generation system load can be further reduced from the minimum load state, further load reduction adversely affects overall system efficiency due to the NCST 30 no longer producing steam supply to process and/or CCS.

The LP steam turbine 33 exhausts into a condenser 80. The main steam turbine 28 drives a generator 40 that produces electrical power via a shaft 34. The main steam turbine 28 generates steam for consumers and end users when operating. In the illustrated embodiment, the gas turbine system 20 drives a load or generator by a shaft 26, however in some examples the gas turbine system 20 and the main steam turbine 28 are coupled on a single, common shaft (not shown).

The main steam turbine 28 is associated with a multi-pressure HRSG 100. The HRSG 100 has three different common operating pressures (high, intermediate, and low) wherein steam is generated at the various pressures and temperatures as vapor feed supplied to the corresponding sections of the main steam turbine 28. The HRSG 100 may include, for example, a low-temperature section 130, an intermediate temperature section 120, and a high-temperature section 110 which both generates and superheats high pressure steam as well as reheating intermediate pressure steam.

The HRSG 100 includes an inlet section 102, and an outlet interface 104 that directs exhaust 14 into downstream components of the power generation system including the exhaust stack and/or carbon capture. In some examples, the HRSG 100 also includes emissions reduction catalysts (not shown). The high-temperature section 110 includes configurations of reheaters 114 and high-temperature superheaters 112 typically arranged in series. In some examples, high-temperature superheaters 112 and/or the high temperature reheaters 114 may be separate or stand-alone components from the HRSG 100.

The high-temperature superheaters 112 generate and output superheated high-pressure steam from the HRSG 100 (or the steam supply system) and the high-temperature reheaters 114 output superheated, intermediate-pressure reheat steam from the HRSG 100 (or the steam supply system). At rated conditions, the high-pressure steam and the reheat steam are characterized as high-temperature steams. The temperature of the reheat steam may be modulated (resulting in a cooler reheat steam) to effectuate temperature control of exit steam from the IP steam turbine 32.

Therefore, steam output from the high-temperature superheaters 112 is referred to as "high pressure high temperature" steam, and steam output from the high-temperature reheaters 114 is referred to as "intermediate pressure high temperature" steam, when exiting the HRSG 100 (or the steam supply system). As the steam flow from the high-temperature superheaters 112 and high-temperature reheaters 114 are expended or otherwise passed through downstream components and processed, they are denoted as high-pressure steam and reheat steam respectively where applicable.

Steam is generated in evaporators 116, 126, 136 and is supplied to the steam turbines 31, 32, 33. The evaporators include a series of fluid tubes (not shown) that extract exhaust heat remaining from upstream sections (superheaters, evaporators, economizers, and reheaters) to generate steam at each pressure level. The fluid tubes of the evaporators are coupled, either directly or indirectly as explained in more detail below, by fluid conduits to economizing sections and to a feed water system that circulates fluid within the heat recovery system. As the exhaust 12 flows through the evaporators and downstream HP economizers, IP and LP steam generation circuits, exhaust gases are further cooled before being exhausted 14 to a stack or to a downstream process such as a steam supply to process and/or CCS. Steam supply to process is from an exhaust of the NCST 30 and/or from pressure-controlled extraction within or at the exhaust of the IP steam turbine 32. In the illustrated embodiment, at least one of conduit 89 (corresponding to the exhaust of the IP steam turbine 32, conduit 88 (corresponding to an outlet of the low-pressure superheater 124) or conduit 145 (corresponding to a cold reheat CRH steam supply to the reheater 114 after mixing with exhaust from the HP steam turbine 31) are directed to steam supply to process and/or CCS.

As used herein, the term "reheat steam temperature control" refers to adjustment of reheat steam exiting the reheater 114. In the illustrated examples, a duct burner 170 is immediately upstream from the reheater 114, such that modulating the firing rate, increases or decreases the temperature of the reheat steam exiting the reheater. To effectuate reheat steam temperature control, other means may also be implemented such as, but not limited to, attemperation.

Condensate (in a liquid form) is supplied from a condenser 80 to the low-temperature section 130 of the HRSG 100 via one or more conduits 84 with the aid of a condensate pump 82. The low-temperature section 130 includes an economizer 138 and a low-pressure evaporator 136. Liquid condensate is heated to steam via gases flowing through the HRSG 100, and the steam is directed to a low-pressure superheater 124 via steam conduit 139 prior to it being routed to the LP steam turbine 33 of the main steam turbine 28 via a conduit 88.

The conduit 89 is in fluid communication with a steam exhaust conduit 89 of the IP steam turbine 32, which collectively can be exhausted to steam extraction. A control valve D selectively admits a portion of steam from the conduit 88 and steam exhaust conduit 89 to the LP steam turbine 33. In some embodiments, control valve D can be closed to control upstream steam pressure during steam extraction to steam supply to process and/or CCS as shown in FIG. 1.

From the economizer 138, feedwater is also directed to a feedwater pump 90 from which liquid feedwater is supplied to an intermediate-pressure (IP) economizer 127 by a conduit 91. High pressure discharge water from the feedwater pump 90 is subsequently routed to a high-pressure economizer 128 via a conduit 92. The HP economizer 128 is coupled via a conduit 129 to a HP economizer 118 upstream from the HP economizer 128 and within intermediate temperature section 120.

Feedwater from IP economizer 127 is directed to an intermediate-pressure evaporator 126 positioned upstream from the IP economizer 127 via a conduit 140. The feedwater is evaporated to steam and is routed to the IP superheater 119 via a conduit 142, prior to it being channeled to reheater 114 of the high-temperature section via a conduit 144. Conduit 145 defines a cold reheat (CRH) steam supply to the reheater 114 after mixing with exhaust from the HP steam turbine 31. In addition, a control valve F selectively diverts steam from the conduit 145 to steam extraction when required. Control valve F is a mixture of superheated steam from the IP superheater 119 (via conduit 142) and from the exhaust of IP steam turbine 32 (via conduit 148).

From the reheater 114, steam is further heated resulting in an increase in temperature. An outlet conduit 146 defines a hot reheat conduit (HRH) of the reheater 114. A control valve A₁ selectively controls a flow of steam channeled from the reheater 114 into the NCST 30 via conduit 147. In some embodiments, an overload valve A₂ is in a parallel configuration with the control valve A₁ which together selectively control steam channeled into the NCST 30. In the illustrated embodiment, steam from the hot reheat conduit 146 may also selectively be directed via line 148 into the IP steam turbine 32 of the main steam turbine 28 and the flow of steam entering the IP steam turbine 32 is controlled by a control valve B₁ and overload valve B₂ in a parallel configuration.

Referring back to the HP economizer 118, water is supplied into a high-pressure evaporator 116 and subsequently fed as steam to a HP superheater 112. In some examples, the HRSG 100 includes at least two superheaters 112. In some examples, the HRSG 100 also includes an attemperator 113. High pressure high temperature superheated steam is directed from the superheater 112 to the HP steam turbine 31 via steam outlet conduit 149. A main steam control valve M controls steam into the HP steam turbine 31.

In the illustrated examples, a duct burner 170 is coupled in series with the reheater 114 and the superheater 112, such that the duct burner 170 is between the reheater 114 and the superheater 112. The duct burner 170 combusts fuel channeled from a fuel source 172. The duct burner 170 facilitates reheat steam temperature control. The duct burner 170 heats the steam exiting the reheater 114 to achieve a target steam temperature. The duct burner 170 can combust fuel at a variable fire rate, and fuel provided to the duct burner 170 can be modulated to selectively control reheat steam temperature, as gas turbine system 20 load is reduced or extracted steam is increased to facilitate maintaining steam turbine extraction temperature within material limits. In some examples, other means of reheat steam temperature control may alternately be employed.

During operation of the system, the operating state of NCST 30 and the main steam turbine 28 generally may need to be adjusted to satisfy grid compliance requirements while still operating at the most efficient levels. By way of example, regional grid operators typically prescribe requirements that power generation plants be able to support a grid as demand and grid frequency vary. Supporting the grid during upsets involves increasing or decreasing fuel to gas turbine 20 and hence steam available to NCST 30 and the main steam turbine. It is desirable to operate the system efficiently while in the turn-down state, which may require active control of steam flow, temperature, and pressure of the steam entering and being extracted from each of the HP, IP, and LP steam turbines 31, 32, and 33. During startup and turn-down conditions of the steam systems, while the gas turbine system 20 is in operation or loading or unloading, it may also be desirable to control flow, temperature, and pressure of the fluid flowing to the HP, IP, and LP steam turbines 31, 32, and 33, respectively, as well as NCST 30 to predictably manage equipment life consumption and achieve the most efficient operating mode.

FIG. 2 is a block diagram of a control system 180 for use with the power generation system to facilitate opening and closing of control valves A₁, A₂, B₁, B₂, D, F, and M of the combined cycle power generation system of FIG. 1. The illustrated example focuses on the novel aspects presented in this disclosure and thus excludes other valves and control functions common to any steam system control found in the art. The control system 180 includes a system controller 182 communicatively coupled to one or more sensors 184 and to the control valves A₁, A₂, B₁, B₂, D, F, and M. The system controller 182 includes a microprocessor 186 and a local memory 188, and the microprocessor 186 communicates with the one or more sensors 184 and to the control valves A₁, A₂, B₁, B₂, D, F, and M using, for example, a wired Modbus connection or a wireless connection. The system controller 182 is further in communication with a network 190. For example, in some examples, system controller 182 further includes a radio module 192 communicatively coupled to microprocessor 186, through which microprocessor 186 can communicate with network 190. In some examples, radio module 192 is configured to communicate with other elements of the network using a specific communications protocol. The control system 180 further includes a user interface 194 for receiving inputs from a user.

The one or more sensors 184 include system performance sensors, pressure sensors, temperature sensors and flow sensors. The control valves A₁, A₂, B₁, B₂, D, F, and M use electrical, pneumatic, or hydraulic power to actuate opening and closing of the valves A₁, A₂, B₁, B₂, D, F, and M between an open state, a closed state and a partially open or partially closed state, and the valves A₁, A₂, B₁, B₂, D, F, and M operate in response to a control signal generated by the system controller 182. Microprocessor 186 is configured to read instructions stored in local memory 188 and generate the control signal for valves A₁, A₂, B₁, B₂, D, F, and M based on the instructions and sensor data received from sensors 184 and the user interface 194. Such instructions include data that defines settings under which microprocessor 186 controls the operation of valves A₁, A₂, B₁, B₂, D, F, and M. For example, valve operation may be controlled by the microprocessor by specifying a particular control signal output for a given sensor data or user input.

In some examples, the system controller 182 is connected to the gas turbine system 20, the steam turbine system 28 and to the HRSG 100 to facilitate operation of the power generation system 10.

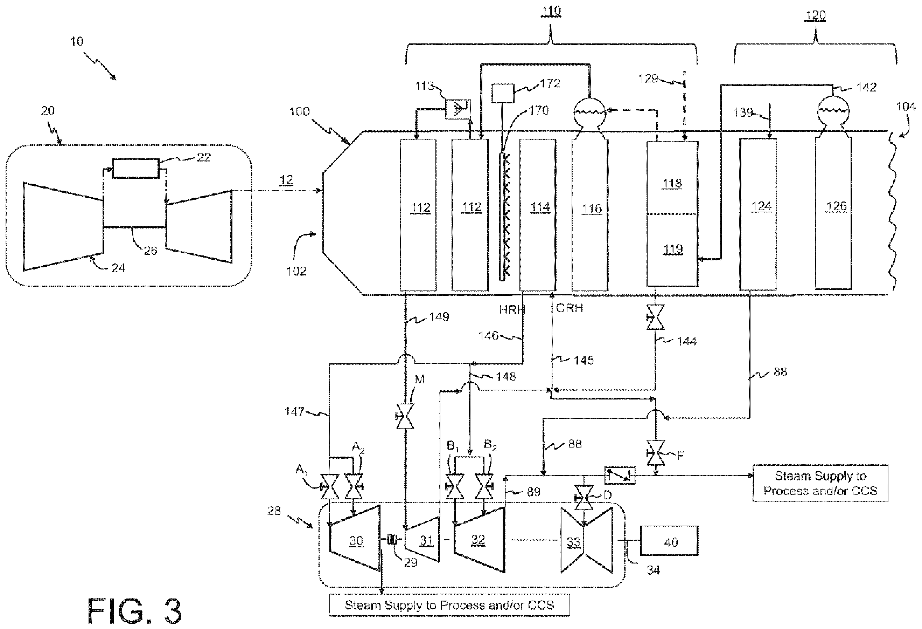

FIG. 3 illustrates a detailed view of the steam turbine system 28 and HRSG 100 with a combined NCST 30 and a parallel IP steam turbine 32 steam supply to process. Hot reheat steam from the reheater 114 is supplied, from conduit 146 to the NCST 30 and to the IP steam turbine 32 via conduits 147 and 148 respectively, defining a parallel configuration of the NCST 30 and the IP steam turbine 32. Conduit 147 includes the control valve A₁ and optionally overload valve A₂, coupled in parallel, which control steam flow into the NCST 30, and conduit 148 includes the control valve B₁ and optionally overload valve B₂, coupled in parallel, such that each controls steam entering the IP steam turbine 32 from the reheater 114. The control valve A₁ and control valve B₁ enable the power generation system to have two turbines available (the NCST 30 and the IP steam turbine 32) to provide process steam so their operation can be coordinated.

Control valve D controls steam flow to the inlet of the LP steam turbine 33 and steam pressure in conduits 88 and 89, selectively diverting a portion of steam from these conduits to process steam extraction. Control valve F selectively diverts steam from the CRH conduit 145 to process steam extraction if valve D has reached it throttling limit and is thus no longer able to maintain steam pressure in conduits 88 and 89 at the target value and NCST 30 is non-operational. Control valve F is a mixture of superheated steam from the IP superheater 119 (via conduit 144) and from the exhaust of HP steam turbine 31. Main steam control valve M controls steam into the HP steam turbine 31. The control valves A₁, A₂, B₁, B₂, D, F, and M define a control valve system that includes one or more processors or controllers to control opening and closing of the valves A₁, A₂, B₁, B₂, D, F, and M in various sequences and configurations as described herein. Each control valve A₁, A₂, B₁, B₂, D, F, and M has a fully open state, a partially open state, and a fully closed state.

As used herein, the terms "fully open" and "fully open state" denote a control valve that is operated at an upper flow limit as required by the system and is substantially fully open. In examples where oversized control valves are used, a "fully open" and "fully open state" of the oversized control valve denotes a control valve operated at an upper flow limit as required by the system, however the control valve may be further opened. Similarly, as used herein, the terms "fully closed" and fully closed state" denote a control valve that is operated at a lower flow limit as required by the system and is substantially fully closed. Therefore, the terms "fully open" and "fully closed" do not require that a control valve be exercised to its physical control limit, and that the control valve may be operated at the either end of its control limit.

The sequences described herein are in accordance with one or more operating load states of the power generation system 10, described for the case where both overload valves A₂ and B₂ are present. Operating load is reduced from a base operating load to one or more of a first load state, second load state etc. to a minimum load state. Stated differently, each plant process change or opening and closing of the valves A₁, A₂, B₁, B₂, D, F, and M are in response to a reduction of operating load of the power generation system 10 as gas turbine 20 load is reduced. The parallel configuration of the NCST 30 and the IP steam turbine 32, in combination with deep reheat steam temperature control facilitates maximum plant load turn-down with expanded steam supply to process. Installation of overload valves A₂ and B₂ further extends the load turndown capability of the IP steam turbine 32 and the NCST 30 respectively.

In an exemplary sequencing operation utilizing the configuration of FIG. 3, in a base load state of the NCST 30, control valves M, A₁, B₁, and D, and overload valves A₂ and B₂ are each in the fully open state with steam supply to process flowing normally as shown in FIG. 3.

As load on the power generation system 10 is reduced to a first load state from a base operating load, control valve D at least partially closes as necessary to facilitate maintaining process extraction steam pressure of the IP steam turbine 32, while control valves A₁ and B₁ remain open as overload valve B₂ and/or overload valve A₂ at least partially close to facilitate maintaining a pressure ratio of steam expanded through at least one of the IP steam turbine 32 and the NCST steam turbine 30. Extraction steam pressure at the exhaust from NCST 30 is maintained by valves in the downstream process steam line (not shown).

As load on the power generation system is reduced to a second load state, and when overload valve B₂ and/or overload valve A₂ is in the fully closed state, control valve A₁ at least partially closes to facilitate maintaining pressure ratio of steam expanded through the IP steam turbine 32 at rated condition. In some embodiments, the NCST 30 is rated for high exhaust temperatures such that the NCST 30 can operate with a low stage pressure ratio without a need to reduce hot reheat steam temperature.

As load on the power generation system is reduced to a third load state, and minimum steam flow to the NCST 30 is reached, control valve A₁ fully closes. The third load state is defined by the IP steam turbine 32 operating at its rated inlet pressure as valve A₁ closes. Because the IP steam turbine 32 is operating at its rated inlet pressure when valve A₁ closes, overload valve B₂ at least partially reopens to facilitate protecting the IP steam turbine 32 from excessive inlet pressure. Furthermore. the NCST 30 ceases to produce power and clutch 29 declutches as NCST 30 and coasts down to turning gear speed.

Alternatively, in some examples the closing of control valve A₁ may be deferred by continued plant unloading, with control valve A₁ held to its minimum opening, thus allowing inlet steam pressure of the IP steam turbine 32 to decrease below its rated inlet value. In this sequencing, closure of control valve A₁ to take the NCST 30 out of service is timed to increase steam flow to the IP steam turbine 32 such that inlet pressure in conduit 148 returns to rated pressure and overload valve B₂ remains closed.

As load on the power generation system is reduced to a minimum load state, overload valve B₂ is first closed to maintain IP steam turbine pressure ratio. After overload valve B₂ is fully closed, further gas turbine unloading reduces HRH steam flow in conduits 146 and 148 and hence IP steam turbine pressure ratio. The HRH steam temperature is reduced to manage IP steam turbine 32 exhaust temperature. The lower load boundary for the fourth load state is reached when control valve D reaches a maximum throttling limit or when steam extraction temperature to process in conduit 89 or upstream in the IP steam turbine 32 reaches its temperature limit despite fully depressed HRH steam temperature.

The reheat steam temperature control is adjusted by duct burner 170 modulation or other reheat steam temperature control means. If the temperature of the IP steam turbine 32 exhaust has reached an operable rated design limit, then steam supply to process will shift to cold reheat supply via control valve F, or similarly provisioned higher pressure steam source. In this operating configuration, in some examples, control valve D opens to eliminate crossover throttling, thus relieving IP steam turbine 32 exhaust temperature. A shift to cold reheat steam supply or the like may also be dictated by other constraints such as IP steam turbine 32 inlet temperature reduction as for cyclic life expenditure considerations.

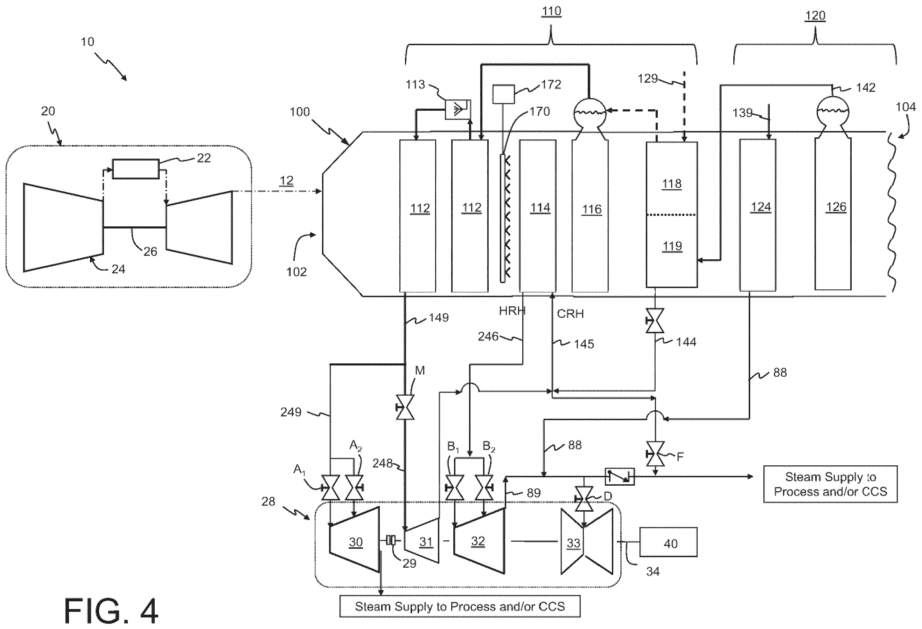

FIG. 4 illustrates an alternative example of the NCST 30 and HRSG 100 with both NCST 30 and HP steam turbine 31 receiving HP steam from conduit 149. Hot reheat steam from the reheater 114 is supplied, from conduit 246 to the IP steam turbine 32. High pressure high temperature steam from the superheater 112 is supplied, from conduit 149 via conduit 248, to the HP steam turbine 31 and via conduit 249 to the NCST 30. Conduit 249 includes the control valve A₁ and optionally an overload valve A₂, coupled in a parallel configuration with control valve A₁, to control steam flow to the NCST 30. Conduit 246 includes the control valve B₁ and optionally overload valve B₂, coupled in parallel, to control the steam supply to the IP steam turbine 32. Control valve D controls steam flow to the inlet of the LP steam turbine 33 and steam pressure in conduits 88 and 89, selectively diverting a portion of steam from these conduits to process steam extraction. Control valve F selectively diverts steam from the CRH conduit 145 to process steam extraction if NCST 30 is non-operational and valve D has reached it throttling limit and is thus no longer able to maintain steam pressure in conduits 88 and 89 at the target value. Control valve F is a mixture of superheated steam from the IP superheater 119 (via conduit 144) and from the exhaust of HP steam turbine 31. Main steam control valve M controls steam into the HP steam turbine 31. Each control valve A₁, A₂, B₁, B₂, D, F, and M has a fully open state, a partially open state, and a fully closed state.

The operation of the NCST 30 and the IP steam turbine 32 in combination with deep reheat steam temperature control enables for maximum plant load turndown with expanded steam supply to process. Furthermore, high pressure steam supply to the NCST 30 facilitates deeper turndown of the NCST 30 before it needs to be shut down or declutched, in contrast to the configuration of FIG. 3 using HRH steam supply from the reheater 114. The exemplary configuration of FIG. 4 includes a first sequencing operation and a second sequencing operation each of which correspond to examples for enabling maximum plant load turndown with expanded steam supply to process.

In the first sequencing operation, in a base load state of the NCST 30, control valves A₁, B₁, and D and overload valves A₂ and B₂ are each in the fully open state with steam supply to process and/or CCS flowing normally from both the IP turbine exhaust and NCST exhaust as shown in FIG. 4.

As load on the power generation system is reduced to a first load state, control valve D at least partially closes as necessary to facilitate maintaining process extraction steam pressure of the IP steam turbine 32, while control valves A₁ and B₁ remain open as overload valves A₂ and B₂ at least partially close to facilitate maintaining a pressure ratio of steam expanded through at least one of the NCST 30 and the IP steam turbine 32. Extraction steam pressure at the exhaust from NCST 30 is maintained by valves in the downstream process steam line (not shown).

As load on the power generation system is reduced to a second load state, and overload valve B₂ is in the fully closed state, control valve B₁ remains fully open as reheat steam temperature is controlled to maintain IP steam turbine 32 exhaust 89 below its limiting temperature limit. Overload valve A₂ also goes fully closed and flow split between NCST 30 and HP steam turbine 31 is managed by coordination of valves A₁ and M, such that process steam supply from the exhaust of NCST 30 in combination with process steam from the IP steam turbine 32 meets the demanded flow.

In some examples, the NCST 30 is rated for high exhaust temperatures such that the NCST 30 can operate with low section pressure ratio without a need to drop inlet steam temperature of the NCST 30. After overload valve B₂ is fully closed, further gas turbine unloading reduces HRH steam flow in conduits 146 and 148 and hence IP steam turbine pressure ratio. The HRH steam temperature is reduced to manage IP steam turbine 32 exhaust temperature. The lower load boundary for the second load state is reached when control valve D reaches a maximum throttling limit or when steam extraction temperature to process in conduit 89 reaches its temperature limit despite fully depressed HRH steam temperature.

As load on the power generation system is reduced to a third load state, process steam extraction from the IP turbine extraction and/or exhaust is stopped. In this operating configuration, in some examples, control valve D opens to eliminate crossover throttling, thus relieving IP steam turbine 32 exhaust temperature. Process steam supply continues from the NCST 30 exhaust until minimum steam flow to the NCST 30 is reached. Control valve A₁ fully closes, causing a modest bump in steam supply pressure to the HP steam turbine 31. Valve M may be full open or partially closed when this load state is entered, depending on power plant load and process steam demand. The NCST 30 ceases to produce power and clutch 29 declutches as NCST 30 coasts down to turning gear speed. As the NCST 30 stops supplying process steam, control valve F opens, receiving a mixture of superheated steam from the IP superheater 119 (via conduit 144) and from the exhaust of HP steam turbine 31 or similarly provisioned higher pressure steam source. Control valves B₁ and D, are in their fully open state throughout this process.

In the second sequencing operation of FIG. 4, in a base load state of the main steam turbine 28 control valves B₁ and D and overload valve B₂ are each in the fully open state with steam supply to process flowing normally mixing IP ST exhaust stream 89 and LP steam stream 88 as shown in FIG. 4. Control valve A₁ and overload valve A₂ supplying NCST 30 are fully closed and the NCST 30 is declutched and on turning gear.

As load on the power generation system is reduced to a first load state, control valve D at least partially closes as to facilitate maintaining process extraction steam pressure of the IP steam turbine 32, while control valve B₁ remains open as overload valve B₂ at least partially closes to facilitate maintaining a pressure ratio of steam expanded through the IP steam turbine 32.

As load on the power generation system is reduced to a second load state (defined by the IP steam turbine inlet pressure beginning to drop) IP steam turbine exhaust temperature tends to increase. With control valve B₁ remaining fully open, hot reheat steam temperature is reduced to facilitate maintaining the IP steam turbine exhaust temperature within its rated limit. The reheat steam temperature control is altered by modulating the duct burner 170 modulation but may be by other prior art means.

As load on the power generation system is reduced to a third load state (defined by a maximum IP steam turbine turndown as determined by any of several limits such as reheat steam temperature control, minimum IP steam turbine inlet temperature, maximum control valve D turndown, and the like) control valve A₁ and overload valve A₂ are opened to activate NCST 30 for steam supply to process and/or CCS. This process steam extraction mode transfer ends process extraction from the IP steam turbine-controlled extraction via conduit 89. The NCST 30 is sized and rated for this partial load plant condition to supply full process flow. After the NCST 30 is serving this supply need, control valve D can revert to fully open, sliding pressure operation. Reheat steam temperature may also be increased since IP steam turbine expansion ratio increases, thereby reducing component and steam temperature at the now inactive extraction point. HP steam flow split between NCST 30 and HP steam turbine 31 is managed by coordination of control valve A₁, overload valve A₂ and main steam control valve M, such that process steam supply from the exhaust of NCST 30 meets the demanded flow. Overload valve A₂closes before control valve A₁.

As load on the power generation system is reduced to a minimum load state, control valve A₁ and main steam control valve M modulate to control steam flow to process. NCST 30 exhaust temperature increases as process flow decreases. The NCST 30 is rated for high exhaust temperature such that the NCST 30 can operate with low section pressure ratio without a need to adjust the steam supply temperature to NCST 30 via conduit 249. When the maximum NCST 30 flow turndown is reached, control valve A₁ closes. The NCST 30 ceases to produce power and declutches and coasts down to turning gear speed. The steam supply to process subsequently shifts to cold reheat supply, or other configured backup steam source, via control valve F.

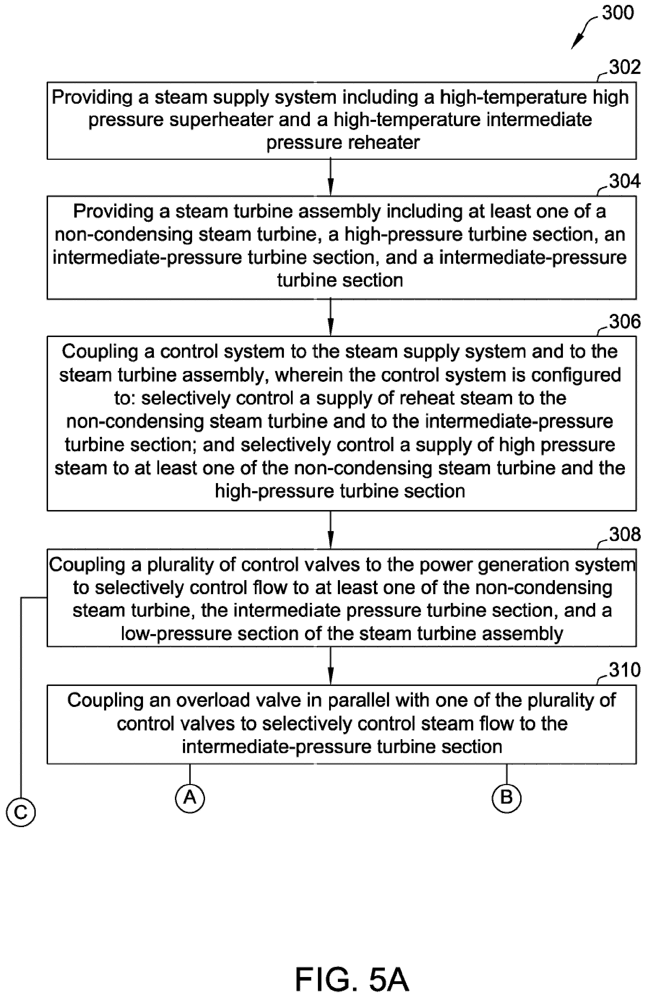

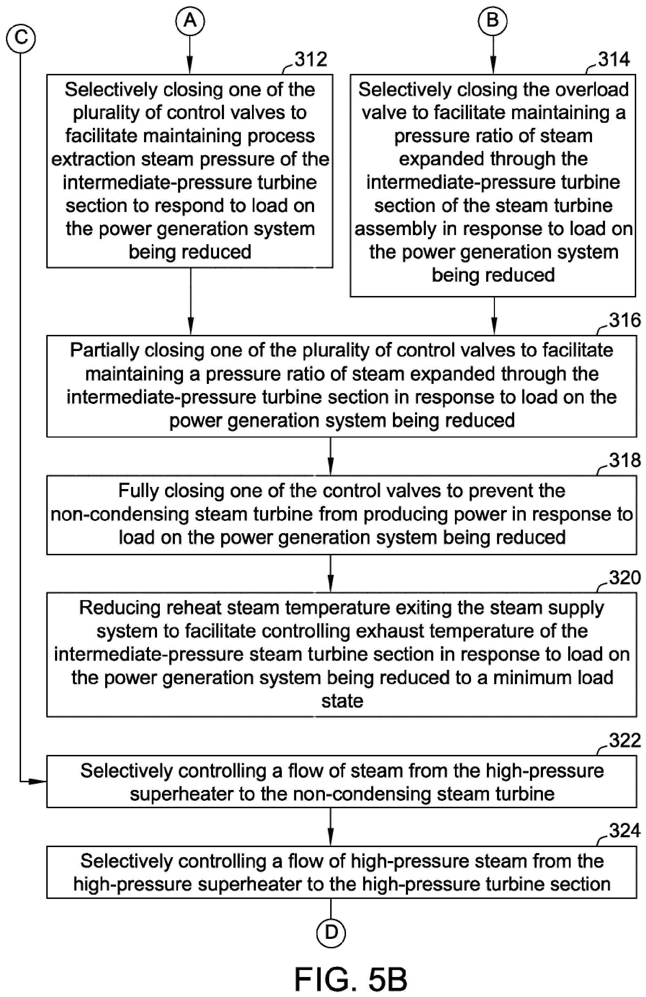

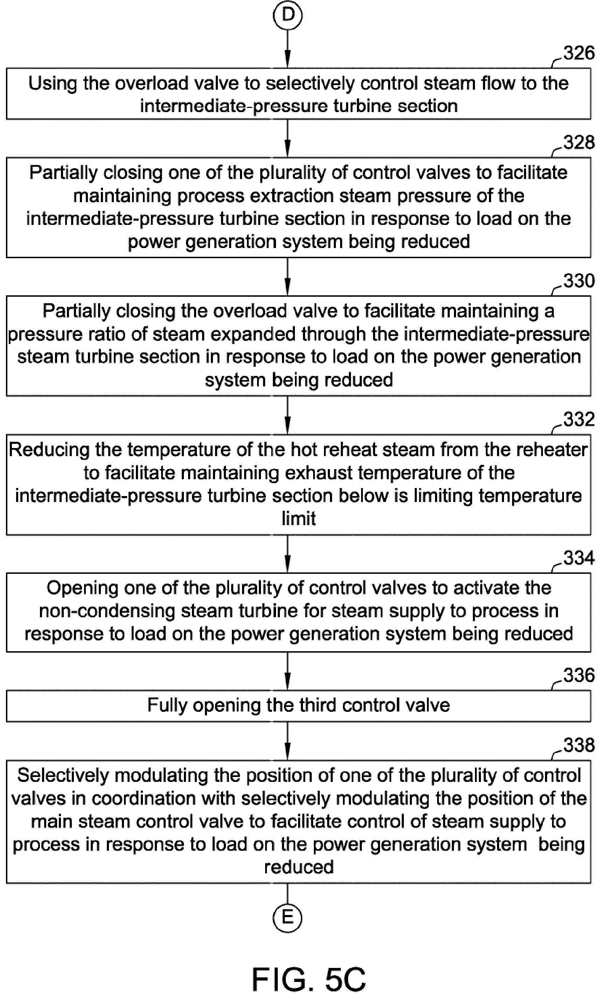

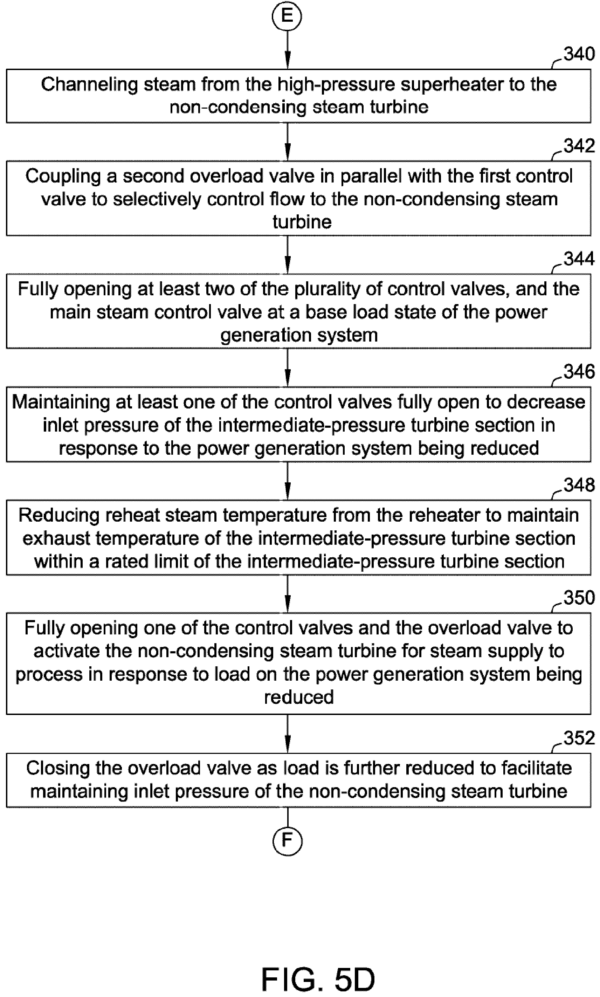

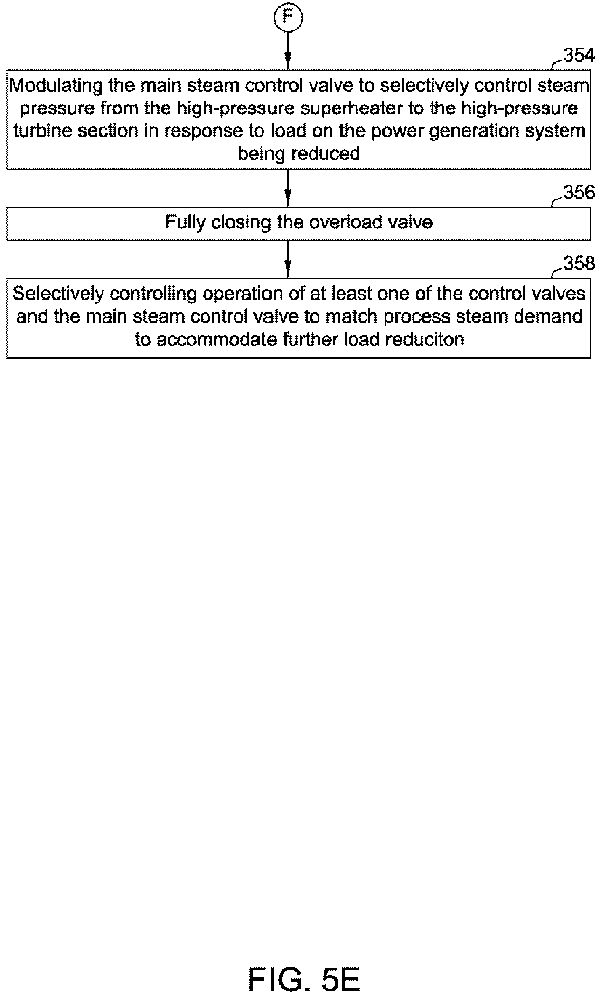

FIGS. 5A through 5E illustrate a method 300 for effectuating load turndown control of a power generation system (such as the systems illustrated in FIGs. 1-3) including a gas turbine assembly.

The method 300 includes providing 302 a steam supply system including a high-temperature high pressure superheater and a high-temperature intermediate pressure reheater, providing 304 a steam turbine assembly including at least one of a non-condensing steam turbine, a high-pressure turbine section, an intermediate-pressure turbine section, and a low-pressure turbine section, and, coupling 306 a control system to the steam supply system and to the steam turbine assembly. The control system is configured to selectively control a supply of reheat steam to the non-condensing steam turbine and to the intermediate-pressure turbine section, and selectively control a supply of high pressure superheated steam to at least one of the non-condensing steam turbine and the high-pressure turbine section.

The method 300 further includes coupling 308 a plurality of control valves to the power generation system to selectively control flow to at least one of the non-condensing steam turbine, the intermediate-pressure turbine section, and a low-pressure section of the steam turbine assembly. The method 300 further includes coupling 310 an overload valve in parallel with one of the plurality of control valves to selectively control flow to the intermediate-pressure turbine section.

The method 300 further includes selectively closing 312 one of the plurality of control valves to facilitate maintaining process extraction steam pressure of the intermediate-pressure turbine section in response to load on the power generation system being reduced, and selectively closing 314 the overload valve to facilitate maintaining a pressure ratio of steam expanded through the intermediate-pressure turbine section of the steam turbine assembly in response to load on the power generation system being reduced.

The method 300 further includes partially closing 316 one of the plurality of control valves to facilitate maintaining a pressure ratio of steam expanded through the intermediate-pressure turbine section in response to load on the power generation system being reduced. The method 300 further includes fully closing 318 one of the control valves to prevent the non-condensing steam turbine from producing power in response to load on the power generation system being reduced. The method 300 further includes reducing 320 reheat steam temperature exiting the steam supply system to facilitate controlling exhaust temperature of the intermediate-pressure steam turbine section in response to load on the power generation system being reduced to a minimum load state.

In some examples, the method 300 further includes selectively controlling 322 a flow of steam from the high-pressure superheater to the non-condensing steam turbine, selectively controlling 324 a flow of steam from the high-pressure superheater to the high-pressure turbine section and using 326 the overload valve to selectively control steam flow to the intermediate-pressure turbine section.

In some examples, the method 300 further includes partially closing 328 one of the plurality of control valves to facilitate maintaining process extraction steam pressure of the intermediate-pressure turbine section in response to load on the power generation system being reduced and partially closing 330 the overload valve to facilitate maintaining a pressure ratio of steam expanded through the intermediate-pressure steam turbine section in response to load on the power generation system being reduced. In some examples, the method 300 further includes reducing 332 the temperature of the hot reheat steam from the reheater to facilitate maintaining exhaust temperature of the intermediate-pressure turbine section below its limiting temperature limit.

In some examples, the method 300 further includes opening 334 one of the plurality of control valves to activate the non-condensing steam turbine for steam supply to process in response to load on the power generation system being reduced and fully opening 336 the third control valve. In some examples, the method 300 further includes selectively modulating 338 the position of one of the plurality of control valves in coordination with selectively modulating the position of the main steam control valve to facilitate control of steam supply to process in response to load on the power generation system being reduced.

In some examples, the method 300 further includes channeling 340 high-pressure steam from the high-pressure superheater to the non-condensing steam turbine, coupling 342 a second overload valve in parallel with the first control valve to selectively control flow to the non-condensing steam turbine and fully opening 344 at least two of the plurality of control valves, and the main steam control valve at a base load state of the power generation system.

In some examples, the method 300 further includes maintaining 346 at least one of the control valves fully open to decrease inlet pressure of the intermediate-pressure turbine section in response to load on the power generation system being reduced and, reducing 348 reheat steam temperature from the reheater to maintain exhaust temperature of the intermediate-pressure turbine section within a rated limit of the intermediate-pressure turbine section. In some examples, the method 300 further includes fully opening 350 one of the control valves and the overload valve to activate the non-condensing steam turbine for steam supply to process in response to load on the power generation system being reduced and closing 352 the overload valve as load is further reduced to facilitate maintaining inlet pressure of the non-condensing steam turbine.

In some examples, the method 300 further includes modulating of 354 the main steam control valve to selectively control - steam pressure from the high-pressure superheater to the high-pressure turbine section in response to load on the power generation system being reduced, fully closing 356 the overload valve; and, selectively controlling 358 operation of at least one of the control valves and the main steam control valve to match process steam demand to accommodate further load reduction.

The systems described herein facilitate improved part-load plant efficiency by extending the operable range with controlled steam extraction active. In particular, the plant design configurations include one or more of (1) deep reheat steam temperature control, (2) an intermediate pressure (IP) turbine and/or NCST overload valve and (3) a non-condensing steam turbine (NCST) receiving either HP or HRH steam in parallel with the HP steam turbine or IP steam turbine. The examples described herein utilize the configurations separately or in combination to achieve the lowest possible plant turndown before a backup source of steam to process is be activated.

The methods, systems, and compositions are not limited to practice with only a rotary machine as described herein. Rather, the methods, systems, and compositions may be implemented and utilized in connection with many other applications.

Further herein disclosed, but not currently claimed, is a control system for use with a power generation system including at least a steam turbine assembly and a steam supply system, wherein the steam turbine assembly includes at least one of a non-condensing steam turbine, a high-pressure steam turbine section, an intermediate-pressure steam turbine section, and a low-pressure steam turbine section, the steam supply system includes at least a high temperature high-pressure superheater and a high-temperature intermediate pressure reheater, the control system including: a first control valve to selectively control a supply of one of high pressure superheated steam and reheat steam to the non-condensing steam turbine; a second control valve to selectively control a supply of reheat steam to the intermediate-pressure steam turbine section; and, a main steam control valve to selectively control a supply of high pressure superheated steam to a high-pressure steam turbine section.

Such control system may further include a third control valve to selectively control a supply of steam to the low-pressure steam turbine section the steam supply system and from the intermediate pressure steam turbine section; an overload valve coupled in parallel with the second control valve to selectively control the supply of reheat steam to the intermediate-pressure steam turbine section; and, an overload valve coupled in parallel with the first control valve to selectively control one of a supply of high pressure superheated steam to the non-condensing steam turbine and a supply of reheat steam to the non-condensing steam turbine.

Further herein disclosed, but not currently claimed, is a method for effectuating load turndown control of a power generation system including a gas turbine assembly, the method including: providing a steam supply system including a high-temperature high pressure superheater and a high-temperature intermediate pressure reheater; providing a steam turbine assembly including at least one of a non-condensing steam turbine, a high-pressure steam turbine section, an intermediate-pressure steam turbine section; and a low-pressure steam turbine section; and, coupling a control system to the steam supply system and to the steam turbine assembly, wherein the control system is configured to: selectively control a supply of reheat steam to the non-condensing steam turbine and to the intermediate-pressure steam turbine section; and selectively control a supply of high pressure superheated steam to at least one of the non-condensing steam turbine and the high-pressure steam turbine section.

Such method may further include coupling a plurality of control valves to the power generation system to selectively control flow to at least one of the non-condensing steam turbine, the intermediate-pressure steam turbine section, and a low-pressure section.

Such method may further include coupling an overload valve in parallel with one of the plurality of control valves to selectively control flow to the intermediate-pressure steam turbine section.

Such method may further include: selectively closing one of the plurality of control valves to facilitate maintaining process extraction steam pressure of the intermediate-pressure steam turbine section in response to load on the power generation system being reduced; and, selectively closing the overload valve to facilitate maintaining a pressure ratio of steam expanded through the intermediate-pressure steam turbine section in response to load on the power generation system being reduced.

Such method may further include partially closing one of the plurality of control valves to facilitate maintaining a pressure ratio of steam expanded through the intermediate-pressure steam turbine section in response to load on the power generation system being reduced.

Such method may further include fully closing one of the control valves to prevent the non-condensing steam turbine from producing power in response to load on the power generation system being reduced.

Such method may further include reducing reheat steam temperature exiting the steam supply system to facilitate controlling exhaust temperature of the intermediate-pressure steam turbine section in response to load on the power generation system being reduced to a minimum load state.

Such method may further include selectively controlling a flow of steam from the high pressure superheater to the non-condensing steam turbine; selectively controlling a flow of steam from the high pressure superheater to the high-pressure steam turbine section; using the overload valve to selectively control flow to the intermediate-pressure steam turbine section.

Such method may further include partially closing one of the plurality of control valves to facilitate maintaining process extraction steam pressure of the intermediate-pressure steam turbine section in response to load on the power generation system being reduced; and, partially closing the overload valve to facilitate maintaining a pressure ratio of steam expanded through the intermediate-pressure steam turbine section in response to load on the power generation system being reduced.

Such method may further include reducing the temperature of the hot reheat steam temperature of the reheater to facilitate maintaining exhaust temperature of the intermediate-pressure steam turbine section below its limiting temperature limit.

Such method may further include opening one of the plurality of control valves to activate the non-condensing steam turbine for steam supply to process in response to load on the power generation system being reduced.

Such method may further include selectively modulating the position of one of the plurality of control valves in coordination with selectively modulating the position of the main steam control valve to facilitate control of steam supply to process in response to load on the power generation system being reduced.

Such method may further include channeling steam from the high-pressure superheater to the non-condensing steam turbine; coupling a second overload valve in parallel with the first control valve to selectively control flow to the non-condensing steam turbine; and fully opening at least two of the plurality of control valves, and the main steam control valve at a base load state of the power generation system.

Such method may further include maintaining at least one of the control valves fully open to decrease inlet pressure of the intermediate-pressure steam turbine section in response to load on the power generation system being reduced; and, reducing reheat steam temperature from the reheater to maintain exhaust temperature of the intermediate-pressure steam turbine section within a rated limit of the intermediate-pressure steam turbine section.

Such method may further include fully opening one of the control valves and the overload valve to activate the non-condensing steam turbine for steam supply to process in response to load on the power generation system being reduced; and, closing the overload valve as load is further reduced to facilitate maintaining inlet pressure of the non-condensing steam turbine.

Such method may further include coupling the main steam control valve to selectively control steam from the high-pressure superheater to the high-pressure steam turbine section in response to load on the power generation system being reduced; fully closing the overload valve; and, selectively controlling operation of at least one of the control valves and the main steam control valve to match process steam demand to accommodate further load reduction.

## Claims

1. A power generation system (10) including a gas turbine (20), the power generation system comprising:
a steam supply system (100) including a high-temperature high pressure superheater (112) and a high-temperature intermediate pressure reheater (114);
a steam turbine assembly including at least a non-condensing steam turbine (30), a high-pressure steam turbine section (31), an intermediate-pressure steam turbine section (32); and,
a control system (180) coupled to the steam supply system (100) and to the steam turbine assembly, the control system configured to:
selectively control a supply of reheat steam (HRH) to the non-condensing steam turbine (30) and to the intermediate-pressure steam turbine section (32); and
selectively control a supply of high pressure superheated steam to the non-condensing steam turbine (30) and high-pressure steam turbine section (31).

2. The power generation system of claim 1, the steam turbine assembly further including a low-pressure steam turbine section (33), wherein the control system comprises a first control valve (A1) to selectively control flow to the non-condensing steam turbine (30), a second control valve (B1) to selectively control flow to the intermediate-pressure steam turbine section (32), and a third control valve (D) to selectively control a supply of steam to the low-pressure steam turbine section (33) from the steam supply system (100).

3. The power generation system of claim 2, wherein the control system further comprises an overload valve (A₂, B₂) coupled in parallel with the second control valve to selectively control flow to the intermediate-pressure steam turbine section (32), wherein the first, second and third control valves and the overload valve are each in a fully open state at a base load of the power generation system.

4. The power generation system of claim 3, wherein the control system is configured to, as load on the power generation system is reduced to a first load state, at least partially close the third control valve to facilitate maintaining process extraction steam pressure of the intermediate-pressure steam turbine section (32) and to at least partially close the overload valve to facilitate maintaining a pressure ratio of steam expanded through the intermediate-pressure steam turbine section.

5. The power generation system of claim 4, wherein the control system is configured to, as load on the power generation system is reduced to a second load state and the overload valve is fully closed, at least partially close the first control valve to facilitate maintaining a pressure ratio of steam expanded through the intermediate-pressure steam turbine section (32).

6. The power generation system of claim 5, wherein the control system is configured to, as load is reduced to a third load state and a minimum steam flow rate to the non-condensing steam turbine (30) is sustained, fully close the first control valve such that the non-condensing steam turbine ceases to produce power.

7. The power generation system of claim 6, wherein the control system is configured to, as load on the power generation system is reduced to a minimum load state, initially close the overload valve, and to reduce reheat steam temperature exiting the steam supply system (100) to facilitate controlling exhaust temperature of the intermediate-pressure steam turbine section (32).

8. The power generation system of claim 2, wherein the non-condensing steam turbine (30) is configured to receive steam from the high pressure superheater (112) via the first control valve, and the high-pressure steam turbine section (31) is configured to receive steam from the high pressure superheater (112) via a main steam control valve (M), wherein the control system further comprises an overload valve coupled in parallel with the second control valve to selectively control flow to the intermediate-pressure steam turbine section (32), wherein the control system is configured to control the second control valve, third control valve, main steam control valve and the overload valve coupled in parallel with the second control valve such that the second control valve, third control valve, main steam control valve and the overload valve coupled in parallel with the second control valve are each in a fully open state at a base load of the power generation system.

9. The power generation system of claim 8, wherein the control system is configured to, as load on the power generation system is reduced to a first load state, at least partially close the third control valve to facilitate maintaining process extraction steam pressure of the intermediate-pressure steam turbine section (32) and at least partially close the overload valve to facilitate maintaining a pressure ratio of steam expanded through the intermediate-pressure steam turbine section.

10. The power generation system of claim 9, wherein the control system is configured to, as load on the power generation system is reduced to a second load state and the overload valve closes, reduce hot reheat steam temperature of the reheater (114) to facilitate maintaining exhaust temperature of the intermediate-pressure steam turbine (32) section below a limiting temperature limit of the intermediate-pressure steam turbine.

11. The power generation system of claim 10, wherein the control system is configured to, as load on the power generation system is reduced to a third load state, open the first control valve to activate the non-condensing steam turbine (30) for steam supply to process

12. The power generation system of claim 11, wherein the control system is configured to, as load on the power generation system is reduced to minimum load state, effect a modulation of the position of the first control valve in coordination with the main steam control valve (M) to facilitate control of steam supply to process.

13. The power generation system of claim 12, wherein the non-condensing steam turbine (30) is configured to receive steam exhausted from the high pressure superheater (112), wherein the control system further comprises an overload valve in parallel with the first control valve to selectively control flow to the non-condensing steam turbine (30), wherein the control system is configured to control the main steam control valve (M) to be fully open, and control the first control valve and the overload valve to be fully closed at a base load state of the power generation system.

14. The power generation system of claim 13, wherein the control system is configured to, as load on the power generation system is reduced to a first load state of the power generation system, at least partially close the third control valve to facilitate maintaining process extraction steam pressure of the intermediate-pressure steam turbine section (32).

15. The power generation system of claim 14, wherein the control system is configured to, as load on the power generation system is reduced to a second load state, maintain the second control valve fully open such that inlet pressure of the intermediate-pressure steam turbine (32) section decreases and reheat steam temperature from the reheater (114) is reduced to maintain exhaust temperature of the intermediate-pressure steam turbine section within a rated limit of the intermediate-pressure steam turbine section.

16. The power generation system of claim 15, wherein the control system is configured to, as load on the power generation system is reduced to a third load state, open the first control valve and the overload valve to activate the non-condensing steam turbine (30) for steam supply to process, and to control the overload valve to be closed as load is further reduced to facilitate maintaining inlet pressure of the non-condensing steam turbine (30).

17. The power generation system of claim 16, wherein the main steam control valve is configured to selectively control steam pressure from the high pressure superheater (112) to the high-pressure steam turbine section (31), wherein the control system is configured to, as load on the power generation system is reduced to a minimum load state and the overload valve is fully closed, accommodate further load reduction by selectively controlling operation of first control valve and main steam control valve to match process steam demand.

18. The power generation system of claim 17, wherein the first control valve is configured such that closing of first control valve reduces an expansion pressure ratio in the non-condensing steam turbine (30).

## Patentansprüche

1. Stromerzeugungssystem (10), das eine Gasturbine (20) einschließt, das Stromerzeugungssystem umfassend:
ein Dampfzufuhrsystem (100), das einen Hochtemperaturhochdrucküberhitzer (112) und einen Hochtemperaturmitteldruckzwischenüberhitzer (114) einschließt;
eine Dampfturbinenanordnung, die mindestens eine Auspuffturbine (30), einen Hochdruckdampfturbinenabschnitt (31), einen Mitteldruckdampfturbinenabschnitt (32) einschließt; und
ein Steuersystem (180), das mit dem Dampfzufuhrsystem (100) und mit der Dampfturbinenanordnung gekoppelt ist, wobei das Steuersystem konfiguriert ist zum:
selektiven Steuern einer Zufuhr von zwischenüberhitztem Dampf (HRH) zu der Auspuffturbine (30) und zu dem Mitteldruckdampfturbinenabschnitt (32); und
selektiven Steuern einer Zufuhr von überhitztem Hochdruckdampf zu der Auspuffturbine (30) und dem Hochdruckdampfturbinenabschnitt (31).

2. Stromerzeugungssystem nach Anspruch 1, wobei die Dampfturbinenanordnung ferner einen Niederdruckdampfturbinenabschnitt (33) einschließt, wobei das Steuersystem ein erstes Steuerventil (A1), um einen Durchfluss zu der Auspuffturbine (30) selektiv zu steuern, ein zweites Steuerventil (B1), um den Durchfluss zu dem Mitteldruckdampfturbinenabschnitt (32) selektiv zu steuern, und ein drittes Steuerventil (D) umfasst, um eine Dampfzufuhr zu dem Niederdruckdampfturbinenabschnitt (33) von dem Dampfzufuhrsystem (100) selektiv zu steuern.

3. Stromerzeugungssystem nach Anspruch 2, wobei das Steuersystem ferner ein Überbelastungsventil (A₂, B₂) umfasst, das parallel zu dem zweiten Steuerventil gekoppelt ist, um den Durchfluss zu dem Mitteldruckdampfturbinenabschnitt (32) selektiv zu steuern, wobei das erste, das zweite und das dritte Steuerventil und das Überbelastungsventil jeweils in einem vollständig geöffneten Zustand bei einer Grundlast des Stromerzeugungssystems sind.

4. Stromerzeugungssystem nach Anspruch 3, wobei das Steuersystem konfiguriert ist, um, wenn eine Last auf das Stromerzeugungssystem auf einen ersten Lastzustand reduziert wird, das dritte Steuerventil mindestens teilweise zu schließen, um ein Aufrechterhalten eines Prozessextraktionsdampfdrucks des Mitteldruckdampfturbinenabschnitts (32) zu erleichtern, und um das Überbelastungsventil mindestens teilweise zu schließen, um das Aufrechterhalten eines Druckverhältnisses von Dampf zu erleichtern, der durch den Mitteldruckdampfturbinenabschnitt expandiert wird.

5. Stromerzeugungssystem nach Anspruch 4, wobei das Steuersystem konfiguriert ist, um, wenn die Last auf das Stromerzeugungssystem auf einen zweiten Lastzustand reduziert wird und das Überbelastungsventil vollständig geschlossen ist, das erste Steuerventil mindestens teilweise zu schließen, um das Aufrechterhalten eines Druckverhältnisses von Dampf zu erleichtern, der durch den Mitteldruckdampfturbinenabschnitt (32) expandiert wird.

6. Stromerzeugungssystem nach Anspruch 5, wobei das Steuersystem konfiguriert ist, um, wenn die Last auf einen dritten Lastzustand reduziert wird und eine minimale Dampfdurchflussgeschwindigkeit zu der Auspuffturbine (30) aufrechterhalten wird, das erste Steuerventil derart vollständig zu schließen, dass die Auspuffturbine aufhört, Strom zu erzeugen.

7. Stromerzeugungssystem nach Anspruch 6, wobei das Steuersystem konfiguriert ist, um, wenn die Last auf das Stromerzeugungssystem auf einen minimalen Lastzustand reduziert wird, zunächst das Überbelastungsventil zu schließen, und um die Temperatur des zwischenüberhitzten Dampfes zu reduzieren, der aus dem Dampfzufuhrsystems (100) austritt, um das Steuern der Abgastemperatur des Mitteldruckdampfturbinenabschnitts (32) zu erleichtern.

8. Stromerzeugungssystem nach Anspruch 2, wobei die Auspuffturbine (30) konfiguriert ist, um Dampf von dem Hochdrucküberhitzer (112) über das erste Steuerventil zu empfangen, und der Hochdruckdampfturbinenabschnitt (31) konfiguriert ist, um Dampf von dem Hochdrucküberhitzer (112) über ein Hauptdampfsteuerventil (M) zu empfangen, wobei das Steuersystem ferner ein Überbelastungsventil umfasst, das parallel zu dem zweiten Steuerventil gekoppelt ist, um den Durchfluss zu dem Mitteldruckdampfturbinenabschnitt (32) selektiv zu steuern, wobei das Steuersystem konfiguriert ist, um das zweite Steuerventil, das dritte Steuerventil, das Hauptdampfsteuerventil und das Überbelastungsventil, das parallel zu dem zweiten Steuerventil gekoppelt ist, derart zu steuern, dass das zweite Steuerventil, das dritte Steuerventil, das Hauptdampfsteuerventil und das Überbelastungsventil, das parallel zu dem zweiten Steuerventil gekoppelt ist, jeweils in einem vollständig geöffneten Zustand bei einer Grundlast des Stromerzeugungssystems sind.

9. Stromerzeugungssystem nach Anspruch 8, wobei das Steuersystem konfiguriert ist, um, wenn die Last auf das Stromerzeugungssystem auf einen ersten Lastzustand reduziert wird, das dritte Steuerventil mindestens teilweise zu schließen, um das Aufrechterhalten des Prozessextraktionsdampfdrucks des Mitteldruckdampfturbinenabschnitts (32) zu erleichtern, und das Überbelastungsventil mindestens teilweise zu schließen, um das Aufrechterhalten eines Druckverhältnisses von Dampf zu erleichtern, der durch den Mitteldruckdampfturbinenabschnitt expandiert wird.

10. Stromerzeugungssystem nach Anspruch 9, wobei das Steuersystem konfiguriert ist, um, wenn die Last auf das Stromerzeugungssystem auf einen zweiten Lastzustand reduziert wird und das Überbelastungsventil schließt, die heiße Temperatur des zwischenüberhitzten Dampfes des Zwischenüberhitzers (114) zu reduzieren, um das Aufrechterhalten der Abgastemperatur des Abschnitts der Mitteldruckdampfturbine (32) unterhalb einer begrenzenden Temperaturgrenze der Mitteldruckdampfturbine zu erleichtern.

11. Stromerzeugungssystem nach Anspruch 10, wobei das Steuersystem konfiguriert ist, um, wenn die Last auf dem Stromerzeugungssystem auf einen dritten Lastzustand reduziert wird, das erste Steuerventil zu öffnen, um die Auspuffturbine (30) für die Dampfzufuhr zu dem Prozess zu aktivieren.

12. Stromerzeugungssystem nach Anspruch 11, wobei das Steuersystem konfiguriert ist, um, wenn die Last auf das Stromerzeugungssystem auf den minimalen Lastzustand reduziert wird, eine Modulation der Position des ersten Steuerventils in Koordination mit dem Hauptdampfsteuerventil (M) zu bewirken, um das Steuern der Dampfzufuhr zu dem Prozess zu erleichtern.

13. Stromerzeugungssystem nach Anspruch 12, wobei die Auspuffturbine (30) konfiguriert ist, um Dampf zu empfangen, der aus dem Hochdrucküberhitzer (112) ausgestoßen wird, wobei das Steuersystem ferner ein Überbelastungsventil parallel zu dem ersten Steuerventil umfasst, um den Durchfluss zu der Auspuffturbine (30) selektiv zu steuern, wobei das Steuersystem konfiguriert ist, um das Hauptdampfsteuerventil (M) zu steuern, um vollständig geöffnet zu sein, und das erste Steuerventil und das Überbelastungsventil zu steuern, um bei einem Grundlastzustand des Stromerzeugungssystems vollständig geschlossen zu sein.

14. Stromerzeugungssystem nach Anspruch 13, wobei das Steuersystem konfiguriert ist, um, wenn die Last auf das Stromerzeugungssystem auf einen ersten Lastzustand des Stromerzeugungssystems reduziert wird, das dritte Steuerventil mindestens teilweise zu schließen, um das Aufrechterhalten des Prozessextraktionsdampfdrucks des Mitteldruckdampfturbinenabschnitts (32) zu erleichtern.

15. Stromerzeugungssystem nach Anspruch 14, wobei das Steuersystem konfiguriert ist, um, wenn die Last auf das Stromerzeugungssystem auf einen zweiten Lastzustand reduziert wird, das zweite Steuerventil derart vollständig geöffnet aufrechtzuerhalten, dass ein Eingangsdruck des Mitteldruckdampfturbinenabschnitts (32) abnimmt und die Temperatur des zwischenüberhitzten Dampfes von dem Zwischenüberhitzer (114) reduziert wird, um die Abgastemperatur des Mitteldruckdampfturbinenabschnitts innerhalb einer Nenngrenze des Mitteldruckdampfturbinenabschnitts aufrechtzuerhalten.

16. Stromerzeugungssystem nach Anspruch 15, wobei das Steuersystem konfiguriert ist, um, wenn die Last auf das Stromerzeugungssystem auf einen dritten Lastzustand reduziert wird, das erste Steuerventil und das Überbelastungsventil zu öffnen, um die Auspuffturbine (30) für die Dampfzufuhr zu dem Prozess zu aktivieren, und um das Überbelastungsventil zu steuern, um geschlossen zu werden, wenn die Last weiter reduziert wird, um das Aufrechterhalten des Eingangsdrucks der Auspuffturbine (30) zu erleichtern.

17. Stromerzeugungssystem nach Anspruch 16, wobei das Hauptdampfsteuerventil konfiguriert ist, um den Dampfdruck von dem Hochdrucküberhitzer (112) zu dem Hochdruckdampfturbinenabschnitt (31) selektiv zu steuern, wobei das Steuersystem konfiguriert ist, um, wenn die Last auf dem Stromerzeugungssystem auf einen minimalen Lastzustand reduziert wird und das Überbelastungsventil vollständig geschlossen ist, eine weitere Lastreduzierung durch selektives Steuern eines Betriebs des ersten Steuerventils und des Hauptdampfsteuerventils zu bewältigen, um einem Prozessdampfbedarf zu entsprechen.

18. Stromerzeugungssystem nach Anspruch 17, wobei das erste Steuerventil derart konfiguriert ist, dass das Schließen des ersten Steuerventils ein Überdruckverhältnis in der Auspuffturbine (30) reduziert.

## Revendications

1. Système de production d'énergie (10) comportant une turbine à gaz (20), le système de production d'énergie comprenant :
un système d'alimentation en vapeur (100) comportant un surchauffeur à haute température et à haute pression (112) et un réchauffeur à haute température et à pression intermédiaire (114) ;
un ensemble turbine à vapeur comportant au moins une turbine à vapeur sans condensation (30), une section de turbine à vapeur à haute pression (31), une section de turbine à vapeur à pression intermédiaire (32) ; et,
un système de régulation (180) accouplé au système d'alimentation en vapeur (100) et à l'ensemble turbine à vapeur, le système de régulation conçu pour :
réguler sélectivement une alimentation en vapeur de réchauffage (HRH) de la turbine à vapeur sans condensation (30) et de la section de turbine à vapeur à pression intermédiaire (32) ; et
réguler sélectivement une alimentation en vapeur surchauffée à haute pression de la turbine à vapeur sans condensation (30) et de la section de turbine à vapeur à haute pression (31).

2. Système de production d'énergie selon la revendication 1, l'ensemble turbine à vapeur comportant en outre une section de turbine à vapeur à basse pression (33), le système de régulation comprenant une première vanne de régulation (A1) pour réguler sélectivement un écoulement vers la turbine à vapeur sans condensation (30), une deuxième vanne de régulation (B1) pour réguler sélectivement un écoulement vers la section de turbine à vapeur à pression intermédiaire (32), et une troisième vanne de régulation (D) pour réguler sélectivement une alimentation en vapeur de la section de turbine à vapeur à basse pression (33) provenant du système d'alimentation en vapeur (100).

3. Système de production d'énergie selon la revendication 2, dans lequel le système de régulation comprend en outre une vanne de surcharge (A₂, B₂) accouplée en parallèle avec la deuxième vanne de régulation pour réguler sélectivement un écoulement vers la section de turbine à vapeur à pression intermédiaire (32), les première, deuxième et troisième vannes de régulation et la vanne de surcharge étant chacune dans un état complètement ouvert au niveau d'une charge de base du système de production d'énergie.

4. Système de production d'énergie selon la revendication 3, dans lequel le système de régulation est conçu pour, lorsque la charge sur le système de production d'énergie est réduite à un premier état de charge, fermer au moins partiellement la troisième vanne de régulation pour faciliter le maintien de la pression de vapeur d'extraction de procédé de la section de turbine à vapeur à pression intermédiaire (32) et pour fermer au moins partiellement la vanne de surcharge pour faciliter le maintien d'un rapport de pression de vapeur détendue à travers la section de turbine à vapeur à pression intermédiaire.

5. Système de production d'énergie selon la revendication 4, dans lequel le système de régulation est conçu pour, lorsque la charge sur le système de production d'énergie est réduite à un deuxième état de charge et que la vanne de surcharge est complètement fermée, fermer au moins partiellement la première vanne de régulation pour faciliter le maintien d'un rapport de pression de vapeur détendue à travers la section de turbine à vapeur à pression intermédiaire (32).

6. Système de production d'énergie selon la revendication 5, dans lequel le système de régulation est conçu pour, lorsque la charge est réduite à un troisième état de charge et qu'un débit de vapeur minimal vers la turbine à vapeur sans condensation (30) est maintenu, fermer complètement la première vanne de régulation de telle sorte que la turbine à vapeur sans condensation cesse de produire de l'énergie.

7. Système de production d'énergie selon la revendication 6, dans lequel le système de régulation est conçu pour, lorsque la charge sur le système de production d'énergie est réduite à un état de charge minimale, fermer initialement la vanne de surcharge, et pour réduire la température de vapeur de réchauffage sortant du système d'alimentation en vapeur (100) pour faciliter la régulation de la température d'échappement de la section de turbine à vapeur à pression intermédiaire (32).

8. Système de production d'énergie selon la revendication 2, dans lequel la turbine à vapeur sans condensation (30) est conçue pour recevoir de la vapeur provenant du surchauffeur à haute pression (112) par l'intermédiaire de la première vanne de régulation, et la section de turbine à vapeur à haute pression (31) est conçue pour recevoir de la vapeur provenant du surchauffeur à haute pression (112) par l'intermédiaire d'une vanne de régulation de vapeur principale (M), le système de régulation comprenant en outre une vanne de surcharge accouplée en parallèle avec la deuxième vanne de régulation pour réguler sélectivement un écoulement vers la section de turbine à vapeur à pression intermédiaire (32), le système de régulation étant conçu pour réguler la deuxième vanne de régulation, la troisième vanne de régulation, la vanne de régulation de vapeur principale et la vanne de surcharge accouplée en parallèle avec la deuxième vanne de régulation sont chacune dans un état complètement ouvert au niveau d'une charge de base du système de production d'énergie.

9. Système de production d'énergie selon la revendication 8, dans lequel le système de régulation est conçu pour, lorsque la charge sur le système de production d'énergie est réduite à un premier état de charge, fermer au moins partiellement la troisième vanne de régulation pour faciliter le maintien de la pression de vapeur d'extraction de procédé de la section de turbine à vapeur à pression intermédiaire (32) et fermer au moins partiellement la vanne de surcharge pour faciliter le maintien d'un rapport de pression de vapeur détendue à travers la section de turbine à vapeur à pression intermédiaire.

10. Système de production d'énergie selon la revendication 9, dans lequel le système de régulation est conçu pour, lorsque la charge sur le système de production d'énergie est réduite à un deuxième état de charge et que la vanne de surcharge se ferme, réduire la température de la vapeur de réchauffage chaude du réchauffeur (114) pour faciliter le maintien de la température d'échappement de la section de turbine à vapeur à pression intermédiaire (32) en dessous d'une limite de température limitante de la turbine à vapeur à pression intermédiaire.

11. Système de production d'énergie selon la revendication 10, dans lequel le système de régulation est conçu pour, lorsque la charge sur le système de production d'énergie est réduite à un troisième état de charge, ouvrir la première vanne de régulation pour activer la turbine à vapeur sans condensation (30) pour l'alimentation en vapeur du procédé

12. Système de production d'énergie selon la revendication 11, dans lequel le système de régulation est conçu pour, lorsque la charge sur le système de production d'énergie est réduite à un état de charge minimale, effectuer une modulation de la position de la première vanne de régulation en coordination avec la vanne de régulation de vapeur principale (M) pour faciliter la régulation de l'alimentation en vapeur du procédé.

13. Système de production d'énergie selon la revendication 12, dans lequel la turbine à vapeur sans condensation (30) est conçue pour recevoir de la vapeur évacuée du surchauffeur à haute pression (112), dans lequel le système de régulation comprend en outre une vanne de surcharge en parallèle avec la première vanne de régulation pour réguler sélectivement un écoulement vers la turbine à vapeur sans condensation (30), le système de régulation étant conçu pour réguler la vanne de régulation de vapeur principale (M) pour qu'elle soit complètement ouverte, et réguler la première vanne de régulation et la vanne de surcharge pour qu'elles soient complètement fermées au niveau d'un état de charge de base du système de production d'énergie.

14. Système de production d'énergie selon la revendication 13, dans lequel le système de régulation est conçu pour, lorsque la charge sur le système de production d'énergie est réduite à un premier état de charge du système de production d'énergie, fermer au moins partiellement la troisième vanne de régulation pour faciliter le maintien de la pression de vapeur d'extraction de procédé de la section de turbine à vapeur à pression intermédiaire (32).

15. Système de production d'énergie selon la revendication 14, dans lequel le système de régulation est conçu pour, lorsque la charge sur le système de production d'énergie est réduite à un deuxième état de charge, maintenir la deuxième vanne de régulation complètement ouverte de telle sorte que la pression d'entrée de la section de turbine à vapeur à pression intermédiaire (32) diminue et que la température de vapeur de réchauffage provenant du réchauffeur (114) est réduite pour maintenir la température d'échappement de la section de turbine à vapeur à pression intermédiaire dans une limite nominale de la section de turbine à vapeur à pression intermédiaire.

16. Système de production d'énergie selon la revendication 15, dans lequel le système de régulation est conçu pour, lorsque la charge sur le système de production d'énergie est réduite à un troisième état de charge, ouvrir la première vanne de régulation et la vanne de surcharge pour activer la turbine à vapeur sans condensation (30) pour l'alimentation en vapeur du procédé, et pour réguler la vanne de surcharge pour qu'elle soit fermée lorsque la charge est encore réduite pour faciliter le maintien de la pression d'entrée de la turbine à vapeur sans condensation (30).

17. Système de production d'énergie selon la revendication 16, dans lequel la vanne de régulation de vapeur principale est conçue pour réguler sélectivement la pression de vapeur provenant du surchauffeur à haute pression (112) vers la section de turbine à vapeur à haute pression (31), le système de régulation étant conçu pour, lorsque la charge sur le système de production d'énergie est réduite à un état de charge minimale et que la vanne de surcharge est complètement fermée, permettre une réduction de charge supplémentaire en régulant sélectivement le fonctionnement de la première vanne de régulation et de la vanne de régulation de vapeur principale pour répondre à la demande en vapeur de procédé.

18. Système de génération d'énergie selon la revendication 17, dans lequel la première vanne de régulation est conçue de telle sorte que la fermeture de la première vanne de régulation réduit un rapport de pression de détente dans la turbine à vapeur sans condensation (30).
